# EUROPEAN PATENT SPECIFICATION

(11) **EP 3 643 489 B1**
(45) Date of publication and mention of the grant of the patent: **07.06.2023**
(21) Application number: 18819648.9
(22) Date of filing: 22.05.2018
(51) Int. Cl.: B29D 30/48, B60C 15/04

(54) **PRODUCTION METHOD FOR BEAD CORE**
HERSTELLUNGSVERFAHREN FÜR EINEN PERLENKERN
PROCÉDÉ DE PRODUCTION DE TRINGLE DE TALON

(30) Priority: 19.06.2017 JP 2017119967
(43) Date of publication of application: 29.04.2020
(73) Proprietor: Bridgestone Corporation, Tokyo 104-8340 (JP)
(72) Inventor: KON, Seiji, Tokyo 104-8340 (JP); KOUNO, Yoshihide, Tokyo 104-8340 (JP)
(74) Representative: Marks & Clerk LLP
(86) International application number: PCT/JP2018/019715
(87) International publication number: WO 2018/235505

(56) References cited:
- WO-A1-2011/122450
- WO-A1-2013/089111
- JP-A- H0 740 715
- JP-A- H11 198 617
- JP-A- 2008 265 563
- JP-A- 2011 235 835
- JP-A- 2011 235 835
- JP-A- 2016 101 810
- US-A- 4 754 794

## Description

### TECHNICAL FIELD

The present disclosure relates to a manufacturing method of a bead core.

### BACKGROUND

Heretofore, a bead core comprising a bead wire coated with a coating resin has been suggested for a purpose of, for example, weight reduction of a member of a pneumatic tire (e.g., see PTL 1). In such a bead core, to decrease the number of turns of the bead wire and thereby improve productivity, it is suggested that a strip member formed by coating one or more bead wires with a coating resin such as a thermoplastic resin is wound only in a stack direction and stacked to form an annular member. In this bead core, coating resins of adjacent stacks can be joined to each other, for example, by welding or bonding.

### CITATION LIST

### Patent Literature

PTL 1: Japanese Patent Laid-Open No. 2011-207157. Attention is also drawn to the disclosures of JP2011 235835, US 4,754,794 and JPH07 40715. In particular, JP 2011 235835 A discloses the features of the preamble of independent claim 1.

### SUMMARY

### (Technical Problem)

In the above technology, however, especially in case of a stacked annular member, coating resins of adjacent stacks might be separated at an interface between the resins when a force such as a large lateral force acts on a tire. Consequently, there is room for improvement of durability of a bead core in which a strip member coated with the coating resin is wound and stacked in a stack direction.

To solve the problem, an object of the present disclosure is to provide a manufacturing method of a bead core by which the bead core having a high durability is obtainable.

### (Solution to Problem)

A manufacturing method of a bead core of the present disclosure is as claimed in claim 1.

### (Advantageous Effect)

According to a manufacturing method of a bead core of the present disclosure, a bead core having a high durability is obtainable.

### BRIEF DESCRIPTION OF THE DRAWINGS

In the accompanying drawings:
FIG. 1 is an axial cross-sectional view illustrating an example of an annular body formed by an annular body forming step in a manufacturing method of a bead core according to an embodiment of the present disclosure;
FIG. 2 is a schematic side view illustrating the example of the annular body formed by the annular body forming step in the manufacturing method of the bead core according to the embodiment of the present disclosure;
FIG. 3 is a schematic cross-sectional view illustrating an example of an injection molding machine for use in an injection step in the manufacturing method of the bead core according to the embodiment of the present disclosure;
FIG. 4 is an axial schematic cross-sectional view of the bead core manufactured by the manufacturing method of the bead core according to the embodiment of the present disclosure;
FIG. 5 is a schematic cross-sectional view illustrating an example of a structure in which a bead filler is disposed outside the bead core in a tire radial direction which is manufactured by the manufacturing method of the bead core according to the embodiment of the present disclosure;
FIG. 6 is a schematic cross-sectional view illustrating another example of the structure in which the bead filler is disposed outside the bead core in the tire radial direction which is manufactured by the manufacturing method of the bead core according to the embodiment of the present disclosure;
FIG. 7 is a tire widthwise cross-sectional view illustrating a tire widthwise half portion of an example of a pneumatic tire including, in each bead portion, the bead core manufactured by the manufacturing method of the bead core according to the embodiment of the present disclosure; and
FIG. 8 is an axial schematic cross-sectional view of a bead core manufactured by a manufacturing method of the bead core according to another embodiment of the present disclosure.

### DETAILED DESCRIPTION

Hereinafter, embodiments of the present disclosure will be illustrated and described in detail with reference to the drawings.

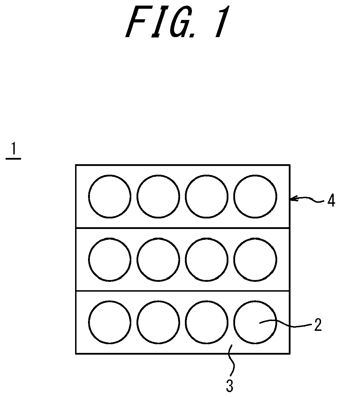

FIG. 1 is an axial cross-sectional view illustrating an example of an annular body formed by an annular body forming step in a manufacturing method of a bead core according to an embodiment of the present disclosure. In the present embodiment, a strip member 4 formed by coating one or more bead wires 2 with a coating resin 3 is wound to form an annular body 1 (an annular body forming step). The annular body 1 illustrated in FIG. 1 is formed by winding the strip member 4 formed by coating one or more (four in an illustrated example) bead wires 2 with the coating resin 3, and the strip member 4 that is almost rectangular in this cross section is layered in three stacks. In this example, four bead wires 2 are arranged in an axial direction of the annular body 1, but the present disclosure is not especially limited to this case, and the number of the bead wires 2 may be one or more.

In the bead wire 2, an arbitrary known material can be used and, for example, a steel cord can be used. The steel cord can comprise, for example, a steel monofilament or a stranded wire. Furthermore, in the bead wire 2, organic fibers, carbon fibers or the like may be used.

Additionally, in the coating resin 3, for example, a thermoplastic elastomer or a thermoplastic resin can be used, or a resin that crosslinks by heat or an electron beam or a resin that cures by thermal dislocation can be used. Examples of the thermoplastic elastomer include polyolefin thermoplastic elastomer (TPO), polystyrene thermoplastic elastomer (TPS), polyamide thermoplastic elastomer (TPA), polyurethane thermoplastic elastomer (TPU), polyester thermoplastic elastomer (TPC), and dynamic crosslinking thermoplastic elastomer (TPV). Furthermore, examples of the thermoplastic resin include polyurethane resin, polyolefin resin, vinyl chloride resin, and polyamide resin. Furthermore, as the thermoplastic resin, a resin can be used in which, for example, a deflection temperature under load (under a load of 0.45 MPa) prescribed in ISO75-2 or ASTM D648 is 78°C or more, a tensile yield strength prescribed in JIS K7113 is 10 MPa or more, a tensile rupture elongation (JIS K7113) similarly prescribed in JIS K7113 is 50% or more, and Vicat softening temperature (A-method) prescribed in JIS K7206 is 130°C or more. It is preferable that the coating resin 3 that coats the bead wire 2 has a tensile elastic modulus (prescribed in JIS K7113: 1995) of 50 MPa or more. Furthermore, it is preferable that the tensile elastic modulus of the coating resin 3 that coats the bead wire 2 is 1000 MPa or less. Note that the coating resin 3 mentioned herein does not contain a rubber (an organic polymer material that exhibits a rubber elasticity at normal temperature).

In the present embodiment, the molten coating resin 3 is applied to an outer peripheral side of the bead wire 2, cooled and thereby solidified, to form the strip member 4. A cross-sectional shape of the strip member 4 (a shape of a cross section orthogonal to an extending direction of the bead wire 2) is almost rectangular in the present embodiment, but is not limited to this example, and can be various shapes, for example, an almost parallelogram. The strip member 4 can be formed in a desired cross-sectional shape, for example, by use of an extruder. Then, the annular body 1 can be formed by winding and stacking the strip member 4. The stacks can be joined to each other, for example, by winding the strip member 4 while melting the coating resin 3 by hot plate welding or the like and solidifying the molten coating resin 3. Alternatively, the stacks can be joined to each other by bonding the stacks with an adhesive or the like.

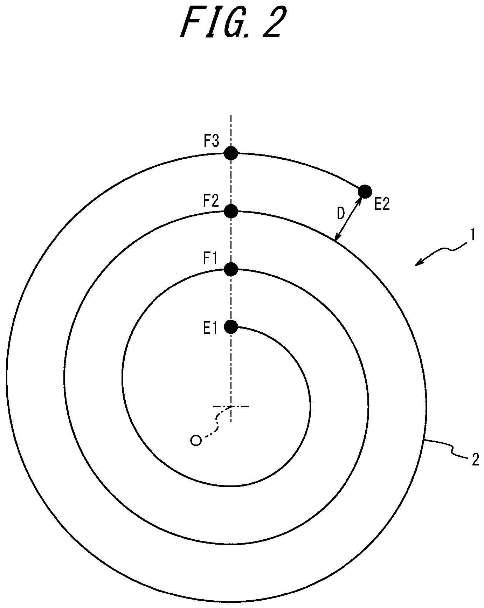

FIG. 2 is a schematic side view illustrating the example of the annular body formed by the annular body forming step in the manufacturing method of the bead core according to the embodiment of the present disclosure as illustrated, for example, in FIG. 1. FIG. 2 only illustrates the bead wire 2 for simplicity (FIG. 2 illustrates a center line of the bead wire 2), and omits depiction of the coating resin 3. As illustrated in FIG. 2, the bead wire 2 is wound from a winding start end E1 spirally in this cross-sectional view. F1, F2 and F3 indicate orbital positions, and in this example, a winding end edge E2 extends beyond at least a point F3. Therefore, when seen at an arbitrary radial position, the bead wire 2 is stacked in three or more stacks in this example. There are not any special restrictions on a length (an overlap length) of the bead wire from the orbital position (the point F3 in this example) located closest to a winding end edge E2 side to the winding end edge (a point E2 in this example). For example, the length can be from 1/200 to 199/200 of an orbital distance from a point F2 to the point F3. When the length is 1/200 or more of the orbital distance, an area where the coating resins come in contact with each other can increase between the bead wires 2 adjacent in a radial direction (a stack direction). Consequently, for example, an adhesiveness or a welding force can be increased, and a tensile burden can be decreased. On the other hand, when the length is 199/200 or less of the orbital distance, the bead core can have a reduced weight. For similar reasons, the overlap length is preferably from 1/100 to 2/3 of the orbital distance from the point F2 to the point F3, and more preferably from 1/50 to 1/3 of the orbital distance from the point F2 to the point F3.

In the present embodiment, subsequently to the above annular body forming step, the annular body formed in the above annular body forming step is coated with a resin (a resin coating step). Specifically, the step comprises a step of disposing the annular body formed in the annular body forming step in a cavity of a bead core forming injection mold, and injecting a molten injection resin to the cavity (an injection step).

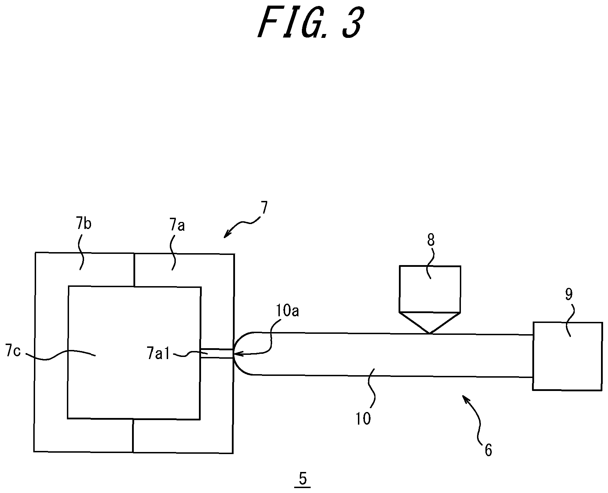

FIG. 3 is a schematic cross-sectional view illustrating an example of an injection molding machine for use in the injection step in the manufacturing method of the bead core according to the embodiment of the present disclosure. In the injection step of the embodiment of the present disclosure, various known injection molding machines can be used. Hereinafter, an example of the machine will be described. As illustrated in FIG. 3, an injection molding machine 5 of this embodiment comprises an injection unit 6 and a bead core forming injection mold 7. The injection unit 6 includes a hopper 8, a motor 9, and a cylinder 10. A tip of the cylinder 10 is provided with a hole 10a through which an injection resin 11 (non-illustrated in FIG. 3) is injected to the bead core forming injection mold 7. The injection resin 11 thrown into the hopper 8 is fed from a rear portion of the cylinder 10 to a front portion (toward the bead core forming injection mold 7) by rotation of a screw (non-illustrated) driven by the motor 9. During this time, the injection resin 11 is heated and molten with a heater (non-illustrated) installed around the cylinder 10. Then, the molten injection resin 11 is fed to the front portion of the cylinder 10 and injected to the bead core forming injection mold 7.

As illustrated in FIG. 3, the bead core forming injection mold 7 comprises two divided portions of a first mold 7a and a second mold 7b. The first mold 7a includes a gate 7a1 through which the injection resin 11 is fed from the injection unit 6, and a recess portion defined by inner walls. Furthermore, the second mold 7b also includes a recess portion defined by inner walls. Consequently, in a case where the first mold 7a is brought into contact with the second mold 7b to place the bead core forming injection mold 7 in a closed state (FIG. 3 illustrates this closed state), a cavity 7c having a shape corresponding to two recess portions (the combined recess portions) is defined and formed in the mold 7. In an illustrated example, the cavity 7c has an almost square cross section.

The first mold 7a and the second mold 7b can be opened and closed by a non-illustrated mold clamping mechanism. In the present embodiment, the bead core forming injection mold 7 is placed in an opened state, to dispose the annular body 1 formed in the above annular body forming step between the first mold 7a and the second mold 7b. Then, the bead core forming injection mold 7 is placed in the closed state, thereby disposing the annular body 1 in the cavity 7c of the bead core forming injection mold 7. Note that it is preferable to fix the annular body 1 with a jig or the like and to dispose and locate the entire annular body 1 in the cavity 7c (especially in a center of the cavity 7c) in a case where the bead core forming injection mold 7 comes in the closed state.

In the present embodiment, the above injection step is performed using, for example, the injection molding machine 5 described above. In the present embodiment, subsequently to the injection step, the injected injection resin 11 is cooled and thereby solidified (a cooling step). In the cooling, the resin can be cooled and solidified in the mold 7 having an interior controlled at a temperature lower than a resin melting point.

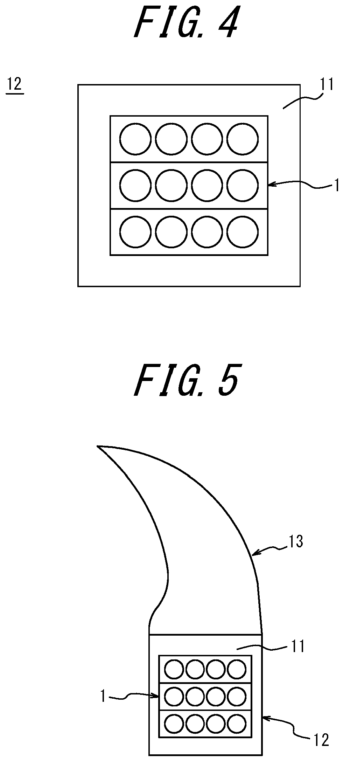

FIG. 4 is an axial schematic cross-sectional view of the bead core manufactured by the manufacturing method of the bead core according to the embodiment of the present disclosure. After the above cooling step, the bead core forming injection mold 7 is placed in the opened state, and a completed bead core 12 is removed from the bead core forming injection mold 7. The bead core 12 includes the annular body 1 having a configuration where a circumference (an entire circumference in an illustrated example) of the annular body 1 is covered with the solidified injection resin 11.

According to the manufacturing method of the bead core of the present embodiment, the stacked annular body 1 receives a force of thermal contraction due to the injection resin 11 injected to the circumference of the annular body in the above cooling step. Consequently, the annular body 1 can be fastened with the surrounding injection resin 11. Then, the bead core 12 has a configuration where the circumference (the entire circumference in the present embodiment) of the annular body 1 is covered with the solidified injection resin 11. Consequently, the surrounding solidified injection resin 11 can protect the annular body 1 against an external force such as a lateral force of the tire. Additionally, the annular body 1 is fastened with the surrounding solidified injection resin 11, so that shape collapse of the annular body can be inhibited. As described above, according to the manufacturing method of the bead core of the present disclosure, the bead core 12 having a high durability is obtainable.

FIG. 5 is a schematic cross-sectional view illustrating another example of a structure in which a bead filler is disposed outside the bead core in a tire radial direction which is manufactured by the manufacturing method of the bead core according to the embodiment of the present disclosure. As illustrated in FIG. 5, a bead filler 13 can be disposed outside the bead core 12 in the tire radial direction. In the example illustrated in FIG. 5, the bead filler 13 may be made of a resin or a rubber.

In a case where the bead filler 13 is made of the resin, such a resin can be the same resin as the injection resin 11, or a resin different from the injection resin 11. Furthermore, in the case where the bead filler 13 is made of the resin, a hardness of the bead filler 13 may be larger than, equal to, or smaller than a hardness of the injection resin 11. Furthermore, in a case where the bead filler 13 is made of the rubber, the hardness of the bead filler 13 is generally smaller than the hardness of the injection resin 11, but may be larger than or equal to the hardness.

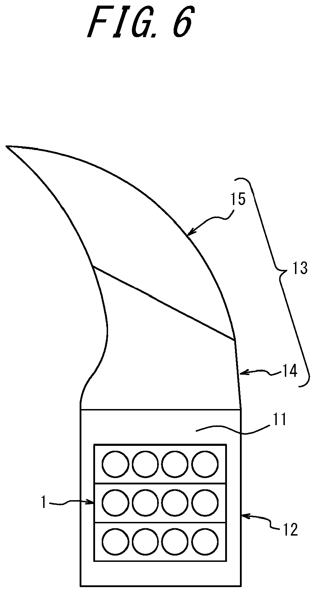

FIG. 6 is a schematic cross-sectional view illustrating an example of the structure in which the bead filler is disposed outside the bead core in the tire radial direction which is manufactured by the manufacturing method of the bead core according to the present embodiment. In this example, the bead filler 13 comprises a radially inner side portion 14 and a radially outer side portion 15. Also in this case, the bead filler 13 may be made of the resin or the rubber. Both of the radially inner side portion 14 and the radially outer side portion 15 can be made of the resin or the rubber. Alternatively, one of the portions can be made of the resin and the other portion can be made of the rubber.

The bead core 12, the radially inner side portion 14 of the bead filler 13 and the radially outer side portion 15 of the bead filler 13 can have an arbitrarily set magnitude relation in hardness, but it is preferable that the hardness of the radially outer side portion 15 is smaller than the hardness of the radially inner side portion 14. The reason is that a difference in rigidity from a sidewall portion can be decreased. Note that in a case where the radially inner side portion 14 and the radially outer side portion 15 are made of the resin, the radially inner side portion 14 and the radially outer side portion 15 can be welded and bonded. In a case where the bead core 12 and the radially inner side portion 14 of the bead filler 13 are both made of the resin, the bead core and the portion can be joined, for example, by welding or bonding with an adhesive or the like. In a case where at least one of the bead core 12 and the radially inner side portion 14 of the bead filler 13 is made of the rubber, the bead core and the portion can be joined, for example, by the bonding with the adhesive or the like.

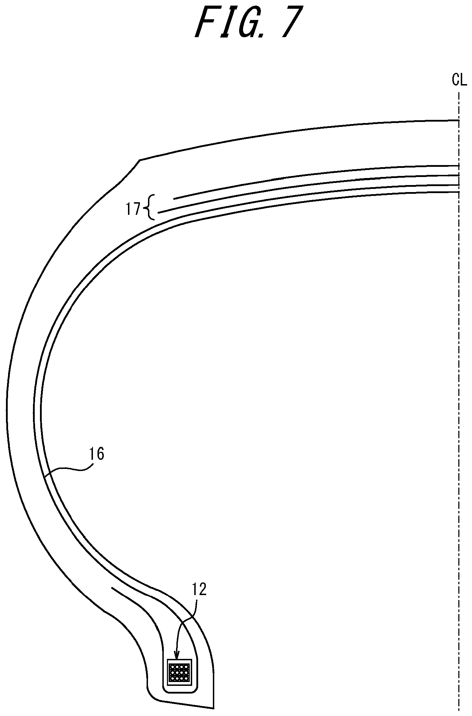

The structures illustrated in FIG. 5 and FIG. 6 are applicable to a bead portion of a pneumatic tire including a pair of bead portions. FIG. 7 is a tire widthwise cross-sectional view illustrating a tire widthwise half portion of the pneumatic tire including, in each bead portion, the bead core manufactured by the manufacturing method of the bead core according to the embodiment of the present disclosure. FIG. 7 only illustrates the tire widthwise half portion with a tire equatorial plane CL as a boundary, but another non-illustrated half portion also has a similar configuration. As an example, as illustrated in FIG. 7, the tire comprises the bead core 12 manufactured by the manufacturing method of the bead core according to the embodiment of the present disclosure and embedded in each of the pair of bead portions, and includes a belt comprising two belt layers in the illustrated example on a tire radially outer side of a carcass 16 that toroidally straddles the bead core 12.

In the present disclosure, it is preferable that in the injection step, the entire annular body 1 is disposed to be located in the cavity 7c and the injection resin 11 is injected to the entire circumference of the annular body 1 as in the above embodiment. The reason is that an effect of fastening the annular body 1 due to the thermal contraction can further improve, and the bead core having a higher durability is obtainable. On the other hand, in the present disclosure, the injection step can comprise disposing and locating a part of the annular body 1 in the cavity 7c, and injecting the injection resin 11 in a part of the circumference of the annular body 1.

In the present disclosure, from a viewpoint of obtaining the bead core 12 having the high durability more easily, it is preferable that the injection resin 11 is the same resin as the coating resin 3. In this case, it is easy to weld or bond the injection resin 11 and the coating resin 3.

In the present disclosure, from a viewpoint of easily adjusting the hardness of the bead core 12, it is preferable that the injection resin 11 is the resin different from the coating resin 3. Here, in general, the resin has a larger hardness than the rubber. Consequently, to decrease the difference in rigidity between the bead core 12 and the surrounding rubber, it is preferable that the injection resin 11 adjacent directly to the rubber has a smaller hardness than the coating resin 3 (the hardness is close to the hardness of the rubber). On the other hand, to further obtain the effect of the thermal contraction, it is preferable that the injection resin 11 has a larger hardness than the coating resin 3.

Alternatively, it is preferable to use a resin having a high adhesiveness to the rubber as the injection resin 11.

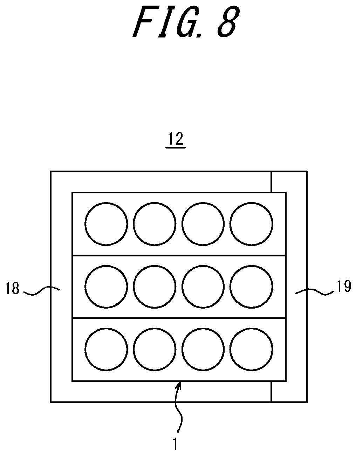

FIG. 8 is an axial schematic cross-sectional view of a bead core manufactured by a manufacturing method of the bead core according to another embodiment of the present disclosure. In this embodiment, a resin coating step comprises depositing a first film 18 and a second film 19, which are made of a resin, in order on an annular body 1 formed by an annular body forming step by three-dimensional lamination, so that the first film 18 and the second film cover a circumference (an entire circumference in this example) of the annular body 1. Note that a known technique can be used in the three-dimensional lamination. Furthermore, each of the first film 18 and the second film 19 may comprise a single layer or multiple layers. Additionally, in the first film 18 and the second film 19, the same material (the same resin) may be used, or different materials (different resins) may be used. Note that in the embodiment illustrated in FIG. 8, the two first and second films are deposited, but three or more films may be deposited.

Also in the embodiment illustrated in FIG. 8, by cooling after the films are heated, the annular body 1 receives a force of thermal contraction from the first film 18 and the second film 19. Furthermore, the annular body 1 is protected from an external force or the like by the first film 18 and the second film 19.

Therefore, also according to the manufacturing method of the bead core of the embodiment illustrated in FIG. 8, a bead core 12 having a high durability is obtainable.

As above, the present disclosure has been described, but the present disclosure is not limited to the above embodiments and examples, but only by the appended claims. For example, in the examples illustrated in FIG. 1 and FIG. 4, three stacks are stacked in the cross section of the annular body 1, but, for example, four or more stacks may be stacked.

### REFERENCE SIGNS LIST

- 1: annular body
- 2: bead wire
- 3: coating resin
- 4: strip member
- 5: injection molding machine
- 6: injection unit
- 7: bead core forming injection mold
- 7a: first mold
- 7a1: gate
- 7b: second mold
- 7c: cavity
- 8: hopper
- 9: motor
- 10: cylinder
- 10a: hole
- 11: injection resin
- 12: bead core
- 13: bead filler
- 14: radially inner side portion
- 15: radially outer side portion
- 16: carcass
- 17: belt
- 18: first film
- 19: second film
- CL: tire equatorial plane

## Claims

1. A manufacturing method of a bead core (12) comprising:
an annular body forming step of winding a strip member (4) formed by coating a plurality of bead wires (2) with a coating resin (3) to form an annular body (1),
a resin coating step of coating the annular body (1) formed in the annular body forming step with a resin (11),
**characterised in that**
the resin coating step includes an injection step of disposing the annular body (1) formed in the annular body forming step in a cavity (7c) of a bead core forming injection mold, and injecting a molten injection resin to the cavity (7c).

2. The manufacturing method of the bead core (12) according to claim 1, wherein in the injection step, the entire annular body (1) is disposed to be located in the cavity (7c), and the injection resin (11) is injected to an entire circumference of the annular body (1).

3. The manufacturing method of the bead core according to any one of claims 1 or 2, wherein the resin (11) is the same resin as the coating resin (3).

4. The manufacturing method of the bead core according to any one of claims 1 or 2, wherein the resin (11) is a resin different from the coating resin (3).

## Patentansprüche

1. Herstellungsverfahren für einen Wulstkern (12), das Folgendes umfasst:
einen Schritt zum Formen eines ringförmigen Körpers bestehend aus dem Wickeln eines Streifenelements (4), das durch Überziehen einer Vielzahl von Wulstdrähten (2) mit einem Überzugsharz (3) geformt ist, um einem ringförmigen Körper (1) zu formen,
einen Harzüberzugsschritt bestehend aus dem Überziehen des in dem Schritt zum Formen eines ringförmigen Körpers geformten ringförmigen Körpers (1) mit einem Harz (11),
**dadurch gekennzeichnet, dass**
der Harzüberzugsschritt einen Einspritzschritt bestehend aus dem Anordnen des in dem Schritt zum Formen eines ringförmigen Körpers geformten ringförmigen Körpers (1) in einem Hohlraum (7c) einer Spritzgussform zur Wulstkernformung, und dem Einspritzen eines geschmolzenen Einspritzharzes in den Hohlraum (7c) einschließt.

2. Herstellungsverfahren für den Wulstkern (12) nach Anspruch 1, wobei in dem Einspritzschritt der gesamte ringförmige Körper (1) so angeordnet wird, dass er sich in dem Hohlraum (7c) befindet, und das Einspritzharz (11) an einen gesamten Umfang des ringförmigen Körpers (1) eingespritzt wird.

3. Herstellungsverfahren für den Wulstkern (12) nach einem der Ansprüche 1 oder 2, wobei das Harz (11) das gleiche Harz wie das Überzugsharz (3) ist.

4. Herstellungsverfahren für den Wulstkern (12) nach einem der Ansprüche 1 oder 2, wobei das Harz (11) ein Harz ist, das sich von dem Überzugsharz (3) unterscheidet.

## Revendications

1. Procédé de fabrication d'une tringle de talon (12), comprenant :
une étape de formation d'un corps annulaire consistant à enrouler un élément de bande (4) formé en revêtant une pluralité de fils de tringle (2) avec une résine de revêtement (3) pour former un corps annulaire (1),
une étape de revêtement de résine consistant à revêtir le corps annulaire (1) formé dans l'étape de formation du corps annulaire avec une résine (11),
**caractérisé en ce que**
l'étape de revêtement de résine inclut une étape d'injection consistant à disposer le corps annulaire (1) formé dans l'étape de formation du corps annulaire dans une cavité (7c) d'un moule à injection de formation de la tringle de talon, et à injecter une résine d'injection fondue dans la cavité (7c).

2. Procédé de fabrication de la tringle de talon (12) selon la revendication 1, dans lequel, lors de l'étape d'injection, l'ensemble du corps annulaire (1) est disposé de sorte à être situé dans la cavité (7c), et la résine d'injection (11) est injectée sur l'ensemble de la circonférence du corps annulaire (1).

3. Procédé de fabrication de la tringle de talon (12) selon l'une quelconque des revendications 1 ou 2, dans lequel la résine (11) est la même résine que la résine de revêtement (3).

4. Procédé de fabrication de la tringle de talon (12) selon l'une quelconque des revendications 1 ou 2, dans lequel la résine (11) est une résine différente de la résine de revêtement (3).
